# EUROPÄISCHE PATENTSCHRIFT

(11) **EP 1 546 263 B1**
(45) Veröffentlichungstag und Bekanntmachung des Hinweises auf die Patenterteilung: **03.10.2007**
(21) Anmeldenummer: 03798906.8
(22) Anmeldetag: 13.09.2003
(51) Int. Cl.: C09B 67/22, C09D 11/00

(54) **ACID RED 82 IN MISCHUNGEN**
ACID RED 82 IN MIXTURES
ROUGE ACIDE 82 DANS DES MELANGES

(30) Priorität: 27.09.2002 DE 10245080
(43) Veröffentlichungstag der Anmeldung: 29.06.2005
(73) Patentinhaber: LANXESS Deutschland GmbH, 51369 Leverkusen (DE)
(72) Erfinder: SOMMERMANN, Thomas, 51467 Bergisch Gladbach (DE); WILD, Peter, 51519 Odenthal (DE)
(86) Internationale Anmeldenummer: PCT/EP2003/010210
(87) Internationale Veröffentlichungsnummer: WO 2004/031301

(56) Entgegenhaltungen:
- EP-A- 0 911 374
- EP-A- 1 048 705
- EP-A- 1 283 248
- DE-A- 3 220 334
- PATENT ABSTRACTS OF JAPAN vol. 014, no. 146 (C-0704), 20. März 1990 (1990-03-20) & JP 02 016171 A (RICOH CO LTD), 19. Januar 1990 (1990-01-19)
- PATENT ABSTRACTS OF JAPAN vol. 007, no. 043 (C-152), 19. Februar 1983 (1983-02-19) -& JP 57 195775 A (FUJI SHASHIN FILM KK), 1. Dezember 1982 (1982-12-01)

## Beschreibung

Die vorliegende Erfindung betrifft Mischungen von Acid Red 82 und Acid Red 80, Verfahren zu ihrer Herstellung sowie ihre Verwendung in einer für das Ink-Jet-Verfahren geeigneten Drucktinte. Entsprechende Drucktinten der Farbe Magenta besitzen eine überraschend hohe Langzeitstabilität, mit der Ausdrucke von sehr hoher Licht- und Ozonechtheit und geeigneter Nuance erzeugt werden können.

Unter Ink-Jet-Verfahren wird ein Tintenstrahlaufzeichnungsverfahren verstanden, bei dem Tröpfchen einer Schreibflüssigkeit (Tinte) aus kleinen Düsen auf ein Substrat (Papier, Textilien, Kunststoff, Metall) gespritzt werden. Durch elektronische Steuerung werden die Tröpfchen zu Schriftzeichen oder graphischen Darstellungen zusammengefasst. Die feinen Tintentröpfchen können durch unterschiedliche Verfahren erzeugt werden; bevorzugt werden dabei die allgemein bekannten kontinuierlichen Verfahren und Drop-on-demand-Verfahren (Thermal-Ink-Jet, Bubble-Jet, Piezo-Ink-Jet) eingesetzt.

Aus EP-A-1 123 932 ist der Einsatz von Anthrapyridonderivaten als Magentafarbstoffe im Ink-Jet-Verfahren bekannt, die sich durch eine besonders hohe Licht- und Ozonechtheit auszeichnen. Insbesondere werden dort Farbstoffe des Typs der allgemeinen Formel (I) 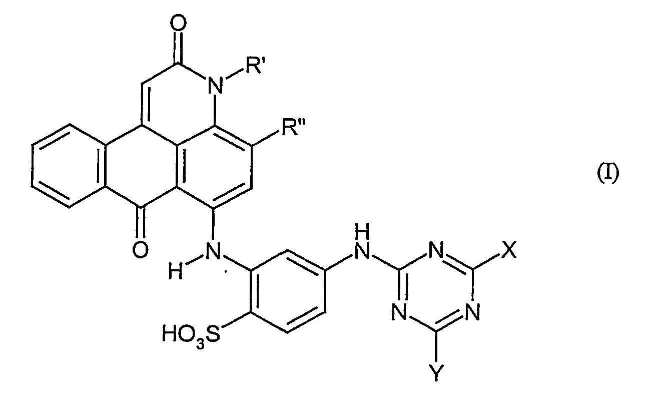 worin
- R': H oder Alkyl;
- R": H, Alkyl, OPh, SO₃H oder COOH
(Ph = Phenyl)
bedeuten, als geeignet beschrieben.

Als Substituenten X und Y werden dabei hauptsächlich solche verwendet, die eine erhöhte Löslichkeit des Farbstoffs in wässriger Lösung bewirken. Jedoch geht der Vorteil der erhöhten Löslichkeit dabei mit einer deutlich reduzierten Farbstärke einher. Zudem ist ein relativ hoher synthetischer Aufwand zur Herstellung der Farbstoffe erforderlich.

Eine ähnlich hohe Licht- und Ozonechtheit wie Farbstoffe vom Typ I, dafür eine deutlich höhere Farbstärke, bieten bereits strukturell einfachere Anthrapyridone wie beispielsweise C. I. Acid Red 82 (Formel IIb), 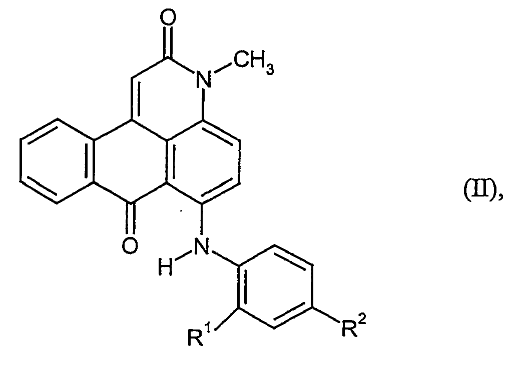 worin
a) R¹ = H; R² = SO₃H : Acid Red 81
b) R¹ = SO₃H; R² = SO₃H : Acid Red 82
c) R¹ = SO₃H; R² = CH₃ : Acid Red 80
bedeuten.

Die Farbstoffe sind bereits einzeln für die Verwendung im Ink-Jet-Verfahren beschrieben, beispielsweise in DE-A-2 543 092, DE-A-3 220 334 und in EP-A-1 048 705.

Ein praktischer Einsatz des einfach herzustellenden Farbstoffs C. I. Acid Red 82 im Ink-Jet-Verfahren konnte jedoch bisher nicht realisiert werden, da in den für den Ink-Jet-Druck verwendeten Tintenformulierungen keine ausreichende Langzeitstabilität erreicht werden konnte. Zudem ist der Farbton einer im Ink-Jet-Verfahren verdruckten wässrigen Tintenlösung von Acid Red 82 rotstichiger als die üblicherweise als Magentakomponente in einem Tintenset verwendeten Farbstofflösungen.

Aufgabe der vorliegenden Erfindung war es daher, eine Möglichkeit zur Verwendung des Farbstoffs C. I. Acid Red 82 in für das Ink-Jet-Verfahren üblichen Tinten bereitzustellen, die eine sehr gute Langzeitstabilität und gegebenenfalls zusätzlich eine leichte bathochrome Verschiebung der Nuance bei gleichbleibender Licht- und Ozonechtheit im Ausdruck bietet. Außerdem sollte deren technische Realisierung den Aufwand für die Herstellung von Acid Red 82 nicht übersteigen.

Überraschender Weise wurde nun gefunden, dass eine Mischung von Acid Red 82 mit dem Anthrapyridonfarbstoff C. I. Acid Red 80 (IIc) in Tintenformulierungen eine deutlich erhöhte Langzeitstabilität aufweist, obwohl die Löslichkeit von Acid Red 80 geringer als die von Acid Red 82 ist.

Eine entsprechende Mischung von Acid Red 82 und Acid Red 81 ergab dagegen eine deutlich schlechtere Langzeitstabilität.

Die Erfindung betrifft daher eine Mischung, enthaltend die Farbstoffe C.I. Acid Red 82 (Formel IIb) und C.I. Acid Red 80 (Formel IIc).

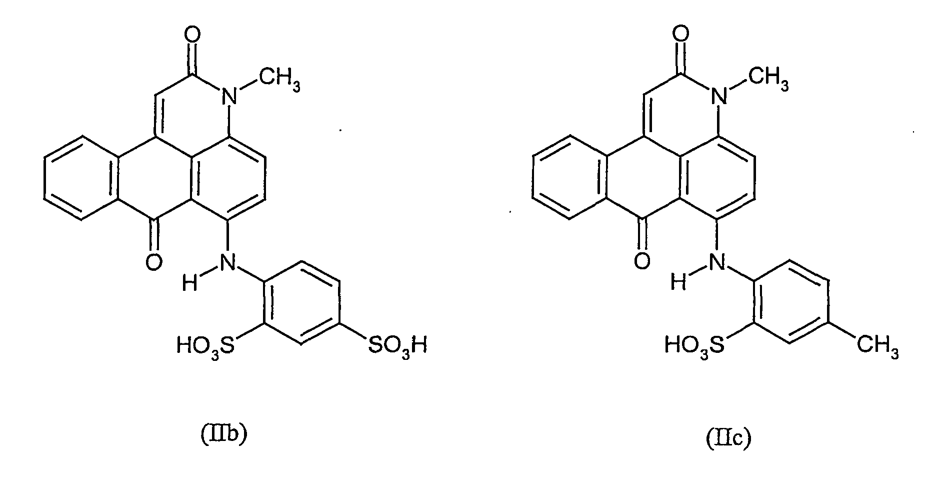

Bevorzugte Mischungen sind dadurch gekennzeichnet, dass das Gewichtsverhältnis von (IIb) zu (IIc) 99:1 bis 1:99, vorzugsweise 98:2 bis 50:50, insbesondere 96:4 bis 70:30, ganz besonders bevorzugt 95:5 bis 85:15, beträgt.

Die Farbstoffe der Formeln (IIb) und (IIc) liegen vorzugsweise in Form ihrer Salze vor, wobei als Kationen Natrium, Lithium, Ammonium, Tetraalkylammonium, Trialkanolammonium, Alkyldialkanolammonium verwendet werden.

Die erfindungsgemäßen Mischungen können in fester Form beispielsweise als Pulver oder Granulate sowie in flüssiger Form beispielsweise als Suspension wie Pasten oder wässrigen Lösungen vorliegen.

Besonders bevorzugt liegen die erfindungsgemäßen Mischungen als wässrige Lösungen vor, die ebenfalls Gegenstand der Erfindung sind.

Die erfindungsgemäßen wässrigen Lösungen können neben den Farbstoffen der Formeln (IIb) und (IIc) selbstverständlich auch noch weitere Farbstoffe, insbesondere zum Nuancieren enthalten.

Bevorzugt sind sie dadurch gekennzeichnet, dass 90 bis 100 Gew.-% insbesondere 95 bis 100, vorzugsweise 98 bis 100 Gew.-% der Farbstoffmenge aus Farbstoffen der Formel (IIb) und (IIc) bestehen.

Die erfindungsgemäßen wässrigen Lösungen enthalten vorzugsweise 0,01 bis 25,0 Gew.-%, insbesondere 0,01 bis 15,0 Gew.-% Farbstoff der Formel (IIb) und (IIc), bevorzugt 0,05 bis 10,0 Gew.-%, besonders bevorzugt 0,1 bis 5,0 Gew.-%. Ebenfalls bevorzugt enthalten sie 25 oder mehr Gew.-%, insbesondere enthalten sie 85 bis 99,99 Gew.-% Wasser und gegebenenfalls Lösungsmittel, vorzugsweise 0 bis 50 Gew.-%, insbesondere 0 bis 15 Gew.-%, sowie gegebenenfalls weitere übliche Bestandteile.

In einer bevorzugten Ausführungsform enthalten die erfindungsgemäßen wässrigen Lösungen 5 bis 25 Gew.-% an Farbstoff, wobei 90-100 Gew.-% der Farbstoffmenge aus Farbstoffen der Formel (IIb) und (IIc) bestehen und der Rest Wasser. Diese werden insbesondere als Konzentrate zur Herstellung von Tinten verwendet.

In einer ebenfalls bevorzugten Ausführungsform enthalten die erfindungsgemäßen wässrigen Lösung 0,01 bis 15,0 Gew.-% Farbstoff der Formel (IIb) und (IIc), bevorzugt 0,05 bis 10,0 Gew.-%, besonders bevorzugt 0,1 bis 5,0 Gew.-%. Ebenfalls bevorzugt enthalten diese 0 bis 50 Gew.-%, vorzugsweise 15 bis 40 Gew.-% organisches Lösungsmittel. Derartige wässrige Lösungen werden vorzugsweise als Aufzeichnungsflüssigkeit (Tinte) verwendet.

Bevorzugte organische Lösungsmittel sind solche, die mit Wasser mischbar sind, insbesondere Alkohole und deren Ether oder Ester, Carbonsäureamide, Harnstoffe, Sulfoxide und Sulfone, insbesondere solche mit Molekulargewichten <200 g/Mol. Besonders geeignete Lösungsmittel sind beispielsweise: Methanol, Ethanol, Propanol; Ethylen-, Propylen-, Diethylen-, Thiodiethylen- und Dipropylenglykol; Butandiol; -Hydroxypropionitril, Pentamethylenglykol, Ethylenglykolmonoethyl-, propyl- und butylether, Ethylendiglykolmonoethylether, Triethylenglykolmonobutylether, Butylpolyglykol, Formamid, Triethylenglykol, 1,5-Pentandiol, 1,3,6-Hexantriol, Essigsäure-2-hydroxyethylester, Essigsäure-2(2'-hydroxy)-ethylester, Glycerin, Glykolacetat, 1,2-Dihydroxypropan, 1-Methoxy-2-propanol, 2-Methoxy-1-propanol, N,N-Dimethylformamid, Pyrrolidon, ε-Caprolactam, N-Methyl-caprolactam, Butyrolacton, Harnstoff, Tetramethylharnstoff, 1,3-Dimethyl-2-imidazolidinon, N,N'-Dimethylolpropylenharnstoff, Dimethylsulfoxid, Dimethylsulfon, Sulfolan, Isopropanol, Polyethylenglykol sowie Mischungen davon.

Es ist weiterhin bevorzugt, dass die erfindungsgemäßen wässrigen Lösungen möglichst wenig Fremdsalze enthalten. Unter Fremdsalzen sind in diesem Zusammenhang in der Regel solche Salze zu verstehen, die bei der Synthese der Farbstoffe der Formel (IIb) und (IIc) anfallen können, z.B. Natrium- oder Kaliumchlorid oder Natrium- oder Kaliumsulfat sowie Mischungen davon.

Der Fremdsalzgehalt ist vorzugsweise <1 Gew.-% bezogen auf die Lösung, insbesondere <0,5 Gew.-%.

Ein entsprechend kleiner Fremdsalzgehalt kann beispielsweise durch Reversosmose oder Ultrafiltration mittels entsprechender Membranen erhalten werden.

Die erfindungsgemäße Mischung kann beispielsweise dadurch hergestellt werden, dass man
a) die Farbstoffe der Formeln (IIb) und (IIc) miteinander mischt oder
b) eine Verbindung der Formel (III) mit einer Mischung von Anilinen der Formeln (IVb) und (IVc) umsetzt und die resultierende Mischung von Verbindungen der Formeln (Vb) und (Vc) sulfiert oder
c) die Verbindungen der Formel (Vb) und (Vc) separat herstellt und gemeinsam zu der erfindungsgemäßen Mischung sulfiert.

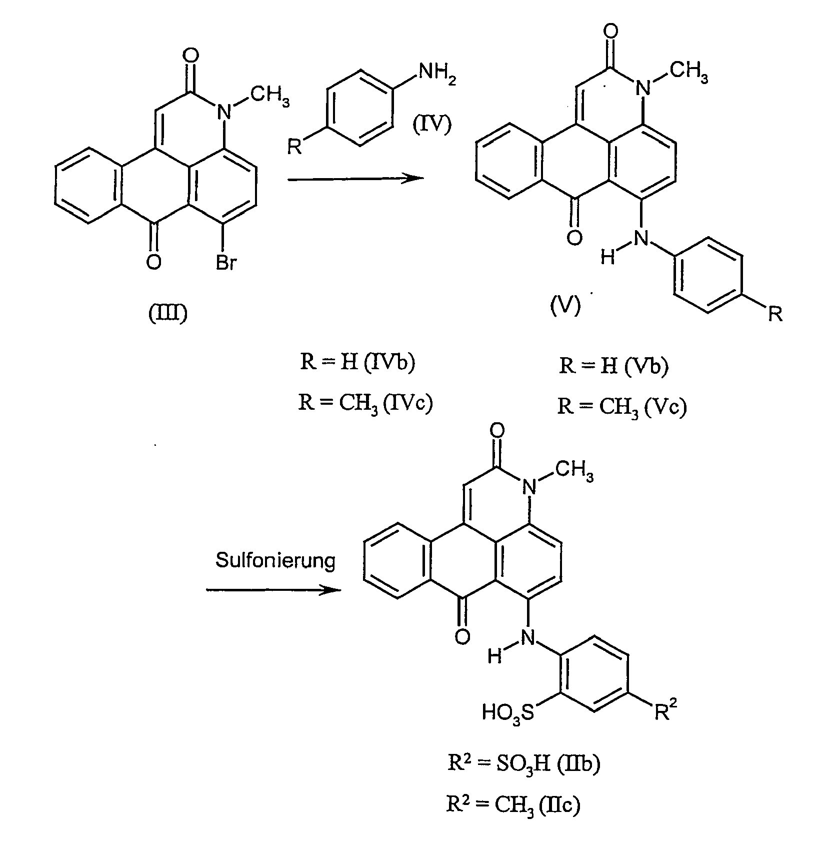

Bei der Herstellungsvariante b) wird 6-Brom-3-methyl-3H-dibenz[f,ij]-isochinolin-2,7-dion der Formel (III) vorzugsweise in einem Gemisch aus Anilin und 4-Methylanilin (IVb + IVc) in einem zum gewünschten Verhältnis der Endprodukte (IIb und IIc) berechneten Verhältnis, insbesondere von 95,3 : 4,7, unter Zusatz von Natriumcarbonat, insbesondere bei einer Temperatur von 170-180°C, umgesetzt und die erhaltene gemischte Farbbase (Vb und Vc) anschließend mittels eines Sulfonierungsmittels, beispielsweise Schwefelsäure mit 20% Anteil Schwefeltrioxid (Oleum 20%), zu dem Produktgemisch aus A. R. 82 (IIb) und A. R. 80 (IIc) sulfiert. Bevorzugt erfolgt die Sulfonierung bei 20-40°C. Durch reverse Osmose kann danach die Mischung entsalzt und mit geeigneten Lösungs- und Hilfsmitteln zu einer Tinte für den Einsatz im Ink-Jet-Verfahren vermischt werden. Dies gilt auch für die nach Variante c) hergestellten Mischungen.

Bei der Herstellungsvariante c) werden durch Umsetzung von 6-Brom-3-methyl-3H-dibenz[f,ij]-isochinolin-2,7-dion der Formel (III) vorzugsweise mit Anilin beziehungsweise 4-Methylanilin (IVb bzw. IVc) die Farbbasen (Va und Vb) separat hergestellt, in einem zum gewünschten Verhältnis der Endprodukte berechneten Verhältnis gemischt und weiter wie oben beschrieben sulfiert.

Durch getrennte Umsetzung können die Produkte A. R. 82 (IIb) und A. R. 80 (IIc) gemäß der Alternative a) hergestellt und in einem zum gewünschten Verhältnis der Endprodukte berechneten Verhältnis gemischt werden. Nach einer möglichen Entsalzung können die Lösungen dann weiter mit geeigneten Lösungs- und Hilfsmitteln zu einer Tinte für den Einsatz im Ink-Jet-Verfahren vermischt werden.
Die Alternative b) wird bevorzugt eingesetzt.

Als Hilfsmittel kommen beispielsweise Lösungsvermittler, Dispergiermittel, Netzmittel, Biozide oder Puffersysteme in Frage. Der Anteil dieser Komponenten liegt in der Regel bei 0-10 Gew.-%, vorzugsweise bei 0 - 5 Gew.-%, bezogen auf das Gewicht der Präparation.

Bei der Verwendung des erfindungsgemäßen Farbstoffgemisches in Form wässriger Lösungen als Aufzeichnungsflüssigkeit für Ink-Jet-Aufzeichnungssysteme ergeben sich folgende Vorteile im Vergleich zur Verwendung von C. I. Acid Red 82 als Einzelfarbstoff für den gleichen Zweck:
- Es wird eine hohe Langzeitstabilität der Tintenformulierung in Bezug auf die Veränderung von physikalischen Eigenschaften und die Bildung von Ablagerungen erreicht;
- Der Farbton der im Ink-Jet-Verfahren verdruckten Tintenformulierung wird bathochrom verschoben.

Die folgenden Vorteile der Verwendung des Einzelfarbstoffs bleiben unverändert erhalten:
- Es wird eine sehr hohe Licht- und Ozonechtheit der im Ink-Jet-Verfahren erhaltenen Drucke erreicht;
- Es liegt eine im Vergleich zu den oben genannten komplexer aufgebauten Anthrapyridonfarbstoffen der Formel I höhere Farbstärke vor;
- Die Herstellung des Farbstoffgemischs ist mit einem vergleichsweise geringen synthetischen Aufwand verbunden, der lediglich dem der Herstellung des Einzelfarbstoffs entspricht.

Die folgenden Beispiele sollen die Erfindung näher erläutern. Bei den Angaben in Teilen handelt es sich um Gewichtsteile.

### Beispiel 1 (Acid Red 82)

Zur Herstellung von C. I. Acid Red 82 wurden 150 Teile Anilin, 12 Teile Natriumcarbonat und 60 Teile 6-Brom-3-methyl-3H-dibenz[f,ij]-isochinolin-2,7-dion (III) 4 h auf 180 °C erhitzt, 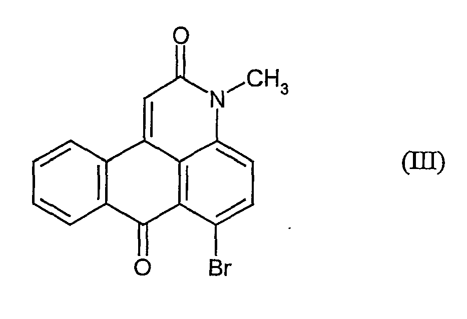 wobei frei werdendes Wasser mittels Wasserabscheider aus der Reaktion entfernt wurde. Nach Abkühlen auf 80 °C wurden 120 Teile Methanol zugesetzt, auf Raumtemperatur abgekühlt, abgesaugt und mit 40 Teilen Methanol gewaschen. Der Rückstand wurde in 150 Teilen Wasser angeschlämmt, mit konz. Salzsäure auf einen pH-Wert von 1 gestellt und 1 h bei 80 °C getempert. Anschließend wurde abgesaugt, mit Wasser gewaschen und getrocknet.

Die erhaltene Paste (65 Teile) wurde portionsweise so in 210 Teile Oleum 20% eingetragen, dass die Temperatur 40 °C nicht überschritt, und 16 h bei 40 °C gerührt. Danach wurde die Reaktionsmischung auf 800 Teile Eis ausgetragen, abgesaugt und mit verdünnter Salzsäure gewaschen. Der feuchte Preßkuchen wurde in 300 ml destilliertem Wasser gelöst, mit Natronlauge auf einen pH-Wert von 7,5 gestellt und mittels reverser Osmose auf einem Salzgehalt von kleiner 0. 1 Gew.-%, bezogen auf die Lösung, entsalzt. Anschließend wurde mit destilliertem Wasser ein Endvolumen von 890 mL eingestellt. Die so erhaltene wässrige Farbstofflösung enthält 10 Gew.-% Reinfarbstoff Acid Red 82.

### Beispiel 2 (Acid Red 80)

Zur Herstellung von C. I. Acid Red 80 arbeitete man wie in Beispiel 1, verwendete jedoch anstelle von 150 Teilen Anilin 170 Teile 4-Methylanilin. Nach der Entsalzung mittels reverser Osmose wurde mit destilliertem Wasser auf ein Endvolumen von 760 mL eingestellt. Die so erhaltene wässrige Farbstofflösung enthält 10% Reinfarbstoff Acid Red 80.

### Beispiel 3

Zur Herstellung einer erfindungsgemäßen Mischung der Komponenten Acid Red 82 und Acid Red 80 im Verhältnis 90:10, bezogen auf Gew.-% Reinfarbstoff, arbeitete man wie in Beispiel 1, verwendete jedoch anstelle von 150 Teilen Anilin eine Mischung aus 143 Teilen Anilin und 7 Teilen 4-Methylanilin. Nach der Entsalzung mittels reverser Osmose wurde mit destilliertem Wasser auf ein Endvolumen von 870 mL eingestellt. Die so erhaltene wässrige Farbstofflösung enthält 10% Reinfarbstoff als Gemisch von Acid Red 82 und Acid Red 80.

### Beispiel 4 (Vergleichsbeispiel)

Zur Herstellung einer für das Ink-Jet-Verfahren geeigneten Tinte wurden folgende Komponenten miteinander vermischt und über ein Cellulosenitrat-Filter der Porengröße 0.2 µm filtriert. Die Tintenformulierung ist in ihrer Zusammensetzung einer üblichen Drucktinte analog, wie sie z.B. in EP-A 1048705 offenbart ist.

| | |
|---|---|
| Farbstofflösung C. I. Acid Red 82 aus Beispiel 1 | 30 Teile |
| Destilliertes Wasser | 35 Teile |
| Glycerin | 5 Teile |
| Diethylenglycol | 15 Teile |
| Diethylenglycol-Monobutylether | 5 Teile |
| 1,3-Dimethylimidazolidin-2-on | 5 Teile |
| N,N-Dimethylharnstoff | 5 Teile |

In dieser Tintenformulierung wurden nach einer Lagerzeit von 8 Wochen bei Raumtemperatur und unabhängig davon nach einer Lagerzeit von 20 Tagen bei 50 °C Ausfällungen beobachtet.

### Beispiel 5 (Vergleichsbeispiel)

Arbeitete man wie in Beispiel 4, verwendete jedoch eine nach Beispiel 2 hergestellte Farbstofflösung von C.I. Acid Red 80, wurden in der Tintenformulierung nach einer Lagerzeit von 6 Wochen bei Raumtemperatur und unabhängig davon nach einer Lagerzeit von 20 Tagen bei 50 °C Ausfällungen beobachtet.

### Beispiel 6 (Vergleichsbeispiel)

Arbeitete man wie in Beispiel 4, verwendete jedoch eine durch Mischung der Einzelfarbstoffe hergestellte 10%ige Farbstofflösung von C. I. Acid Red 82 und Acid Red 81 im Verhältnis 90:10, wurden in der Tintenformulierung nach einer Lagerzeit von 2 Wochen bei Raumtemperatur und unabhängig davon nach einer Lagerzeit von 5 Tagen bei 50 °C Ausfällungen beobachtet.

### Beispiel 7

Arbeitete man wie in Beispiel 4, verwendete jedoch die erfindungsgemäße, nach Beispiel 3 hergestellte Farbstofflösung, konnten auch nach einer Lagerzeit von 6 Monaten bei Raumtemperatur oder bei 50 °C keinerlei Ausfällungen beobachtet werden.

Gleiches wurde im Übrigen beobachtet, wenn die beiden Farbstoffe nicht gemeinsam hergestellt, sondern nach dem separaten Herstellen gemischt und die Mischungen eingesetzt wurden.

## Patentansprüche

1. Mischung, enthaltend die Farbstoffe C.I. Acid Red 82 (Formel IIb) und C.I. Acid Red 80 (Formel IIc)

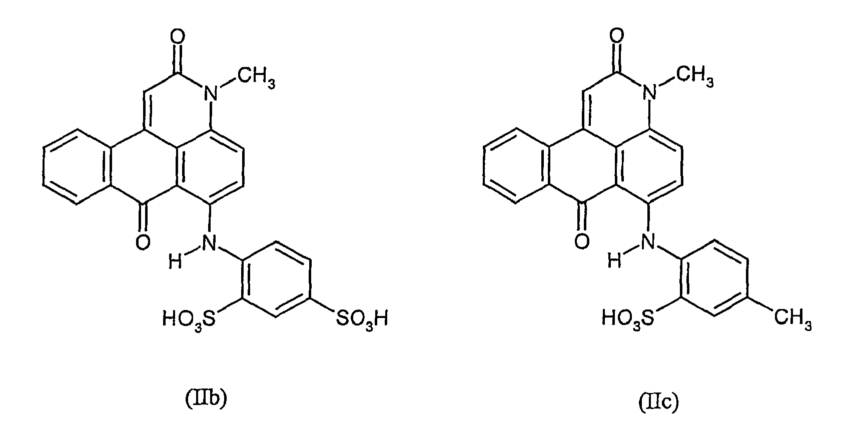

2. Mischung gemäß Anspruch 1, **dadurch gekennzeichnet, dass** das Gewichtsverhältnis von (IIb) zu (IIc) 99:1 bis 1:99, vorzugsweise 98:2 bis 50:50, insbesondere 96:4 bis 70:30, ganz besonders bevorzugt 95:5 bis 85:15, beträgt.

3. Mischungen gemäß wenigstens einem der Ansprüche 1 bis 2, **dadurch gekennzeichnet, dass** die genannten Farbstoffe in Form ihrer Salze vorliegen, wobei als Kationen Natrium, Lithium, Ammonium, Tetraalkylammonium, Trialkanolammonium, Alkyldialkanolarmmonium verwendet werden.

4. Wässrige Lösung enthaltend eine Mischung gemäß wenigstens einem der Ansprüche 1 bis 3.

5. Wässrige Lösung gemäß Anspruch 4, **dadurch gekennzeichnet, dass** 90 bis 100 Gew.-% der Farbstoffmenge aus Farbstoffen der Formel (IIb) und (IIc) bestehen.

6. Wässrige Lösung gemäß einem der Ansprüche 4 bis 5, **dadurch gekennzeichnet, dass** der Farbstoffanteil der Farbstoffe (IIb) und (IIc) 0.01 bis 15.0 Gew.-%, bezogen auf das Gewicht der wässrigen Lösung, beträgt.

7. Wässrige Lösung nach wenigstens einem der Ansprüche 4 bis 6, **dadurch gekennzeichnet, dass** sie 0 bis 50 Gew.-%, vorzugsweise 15 bis 40 Gew.-%, organische Lösungsmittel enthält.

8. Verfahren zur Herstellung von Mischungen gemäß Anspruch 1, **dadurch gekennzeichnet, dass** man
a) die Farbstoffe der Formeln (IIb) und (IIc) miteinander mischt oder
b) eine Verbindung der Formel (III) 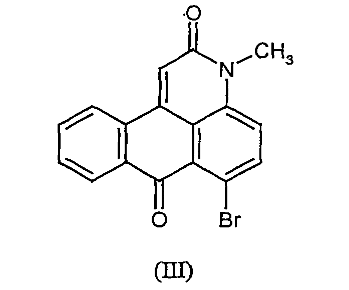 mit einer Mischung von Anilinen der Formeln (IVb) und (IVc) 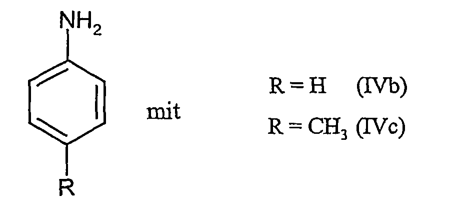 umsetzt und die resultierende Mischung von Verbindungen der Formeln (Vb) und (Vc) 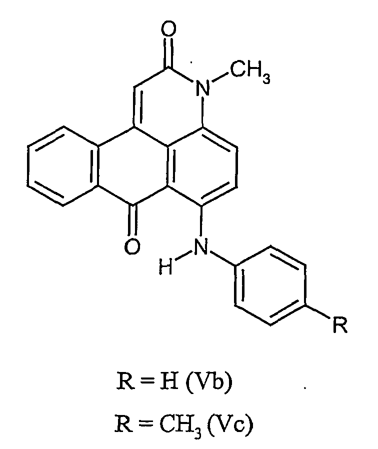 sulfoniert oder
c) die Verbindungen der Formel (Vb) und (Ve) separat herstellt und gemeinsam sulfoniert.

9. Verwendung der wässrigen Lösung nach wenigstens einem der Ansprüche 4 bis 7 als Aufzeichnungsflüssigkeit (Tinte) für den Ink-Jet-Druck.

## Claims

1. A mixture comprising the dyes C.I. Acid Red 82 (formula IIb) and C.I. Acid Red 80 (formula IIc)

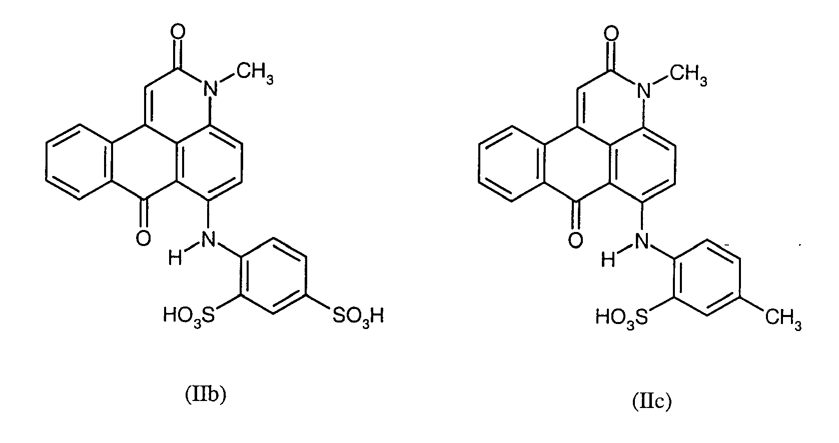

2. A mixture according to claim 1, **characterized in that** the weight ratio of (IIb) to (IIc) is in the range from 99:1 to 1:99, preferably in the range from 98:2 to 50:50, especially in the range from 96:4 to 70:30, and most preferably in the range from 95:5 to 85:15.

3. Mixtures according to at least one of claims 1 to 2, **characterized in that** the dyes mentioned are present in the form of their salts, the cations used being sodium, lithium, ammonium, tetraalkylammonium, trialkanolammonium, alkyldialkanolammonium.

4. An aqueous solution comprising a mixture according to at least one of claims 1 to 3.

5. An aqueous solution according to claim 4, **characterized in that** 90% to 100% by weight of the dye quantity consists of dyes of the formulae (IIb) and (IIc).

6. An aqueous solution according to one of claims 4 to 5, **characterized in that** the dye fraction of the dyes (IIb) and (IIc) is in the range from 0.01% to 15.0% by weight, based on the weight of the aqueous solution.

7. An aqueous solution according to at least one of claims 4 to 6, **characterized in that** it contains 0% to 50% by weight and preferably 15% to 40% by weight of organic solvents.

8. A process for producing mixtures according to claim 1, **characterized in that**
a) the dyes of the formulae (IIb) and (IIc) are mixed with each other, or
b) a compound of the formula (III) 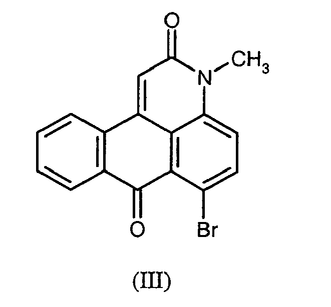 is reacted with a mixture of anilines of the formulae (IVb) and (IVc) 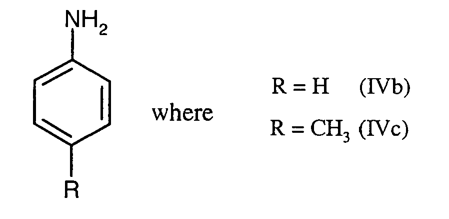 and the resulting mixture of compounds of the formulae (Vb) and (Vc) 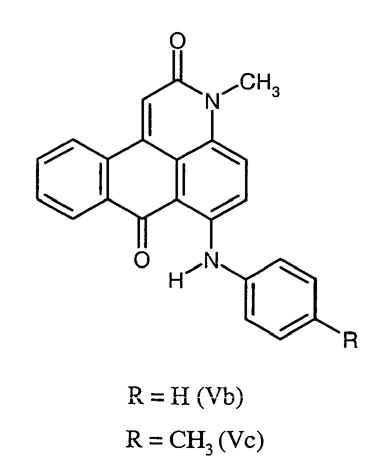 is sulfonated, or
c) the compounds of the formulae (Vb) and (Vc) are separately prepared and conjointly sulfonated.

9. Use of the aqueous solution according to at least one of claims 4 to 7 as a recording fluid (an ink) for ink jet printing.

## Revendications

1. Mélange contenant les colorants C.I. Acid Red 82 (formule IIb) et C.I. Acid Red 80 (formule IIc)

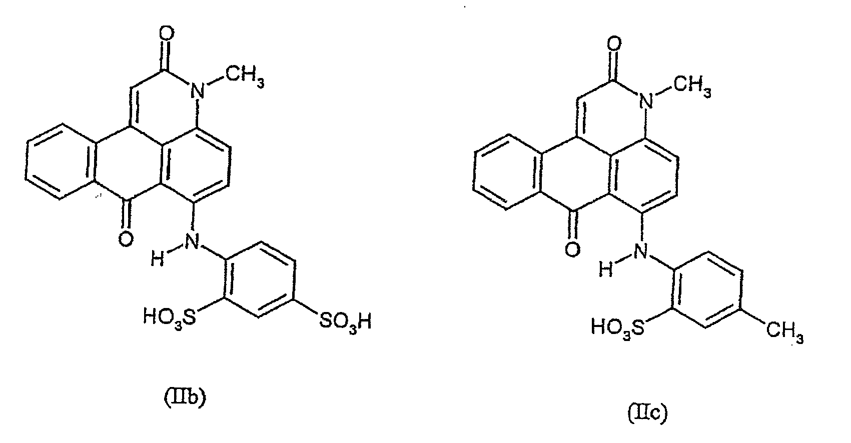

2. Mélange selon la revendication 1, **caractérisé en ce que** le rapport pondéral de (IIb) à (IIc) va de 99:1 à 1:99, de préférence de 98:2 à 50:50, en particulier de 96:4 à 70:30, de façon tout particulièrement préférée de 95:5 à 85:15.

3. Mélanges selon au moins l'une des revendications 1 et 2, **caractérisé en ce que** les colorants cités sont présents sous forme de leurs sels, les ions sodium, lithium, ammonium, tétraalkylammonium, trialcanolammonium, alkyldialcanolammonium étant utilisés en tant que cations.

4. Solution aqueuse contenant un mélange selon au moins l'une des revendications 1 à 3.

5. Solution aqueuse selon la revendication 4, **caractérisée en ce que** 90 à 100 % en poids de la quantité des colorants consistent en colorants de formule (IIb) et (IIc).

6. Solution aqueuse selon l'une quelconque des revendications 4 et 5, **caractérisée en ce que** la proportion des colorants (IIb) et (IIc) va de 0,01 à 15,0 % en poids, par rapport au poids de la solution aqueuse.

7. Solution aqueuse selon au moins l'une des revendications 4 à 6, **caractérisée en ce qu'**elle contient de 0 à 50 % en poids, de préférence de 15 à 40 % en poids, de solvants organiques.

8. Procédé pour la préparation de mélanges selon la revendication 1, **caractérisé en ce que**
a) on mélange l'un avec l'autre les colorants de formules (IIb) et (IIc) ou
b) on fait réagir un composé de formule (III) 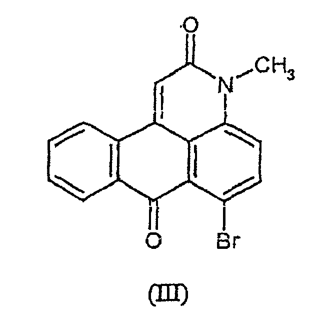 avec un mélange d'anilines de formules (IVb) et (IVc) 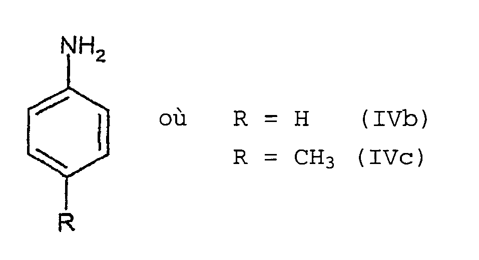 et on soumet à une sulfonation le mélange résultant de composés de formules (Vb) et (Vc) 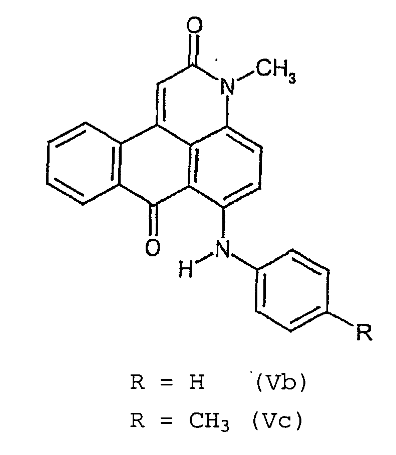 ou
c) on prépare séparément les composés de formules (Vb) et (Vc) et on les soumet ensemble à une sulfonation.

9. Utilisation de la solution aqueuse selon au moins l'une des revendications 4 à 7, en tant que liquide d'enregistrement (encre) pour l'impression par jet d'encre.
